(19) Europäisches Patentamt
European Patent Office
Office européen des brevets

(11) **EP 2 673 827 B1**

(12) **EUROPEAN PATENT SPECIFICATION**

(45) Date of publication and mention
of the grant of the patent:
**02.09.2020 Bulletin 2020/36**

(21) Application number: **12705026.8**

(22) Date of filing: **08.02.2012**

(51) Int Cl.:
**H01M 8/20** *(2006.01)*     **H01M 8/18** *(2006.01)*

(86) International application number:
**PCT/US2012/024334**

(87) International publication number:
**WO 2012/109359 (16.08.2012 Gazette 2012/33)**

(54) **FLOW BATTERY HAVING A LOW RESISTANCE MEMBRANE**

FLUSSBATTERIE MIT EINER MEMBRAN MIT GERINGEM WIDERSTAND

BATTERIE EN FLUX CONTINU COMPORTANT UNE MEMBRANE DE FAIBLE RÉSISTANCE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **08.02.2011 US 201113023101**

(43) Date of publication of application:
**18.12.2013 Bulletin 2013/51**

(73) Proprietor: **United Technologies Corporation
Farmington, CT 06032 (US)**

(72) Inventors:
• **PERRY, Michael L.**
**Glastonbury, Connecticut 06033 (US)**
• **PANDY, Arun**
**Enfield, Connecticut 06082 (US)**
• **ZAFFOU, Rachid**
**West Hartford, Connecticut 06117 (US)**
• **WALKER, Craig R.**
**South Glastonbury, Connecticut 06073 (US)**

(74) Representative: **Dehns
St. Bride's House
10 Salisbury Square
London EC4Y 8JD (GB)**

(56) References cited:
**EP-A1- 1 477 515     EP-A2- 0 875 524
EP-A2- 1 263 066     WO-A2-2006/076031
US-A1- 2003 152 820     US-A1- 2004 067 402
US-A1- 2005 031 925     US-A1- 2007 072 036
US-A1- 2010 003 545**

## Description

CROSS-REFERENCE TO RELATED APPLICATIONS

Applicant hereby claims priority to U.S. Patent Application No. 13/023,101 filed February 8, 2011. This application is also related to PCT Application No. PCT/US09/68681 filed on December 18, 2009 and U.S. Patent Application No. 13/022,285 filed on February 7, 2011.

BACKGROUND

1. Technical Field

This disclosure relates generally to a flow battery system and, more particularly, to a flow battery having a low resistance membrane.

2. Background Information

A typical flow battery system includes a stack of flow battery cells, each having an ion-exchange membrane disposed between negative and positive electrodes. During operation, a catholyte solution flows through the positive electrode, and an anolyte solution flows through the negative electrode. The catholyte and anolyte solutions each electrochemically react in a reversible reduction-oxidation ("redox") reaction. Ionic species are transported across the ion-exchange membrane during the reactions, and electrons are transported through an external circuit to complete the electrochemical reactions US 2010/003545 A1 discloses a redox flow battery including a number of independent cells. To avoid cross mixing of the electrolytes membranes, such as Nafion, are applied between the compartments. The membrane is made of a microporous material having a specific resistance of 200milliohms/cm2. The current density applied to the battery is not explicitly mentioned but it is referred to a charging station for vehicles which implies that the current densities applied are higher than 100mA/cm2. US 2005/031925 A1 discloses a composite solid polymer electrolyte membrane including a porous polymer substrate interpenetrated with an ion exchange material. The polymer substrate comprises a liquid crystalline polymer with a specific resistance of the manufactured membranes between 20-200mohm/ cm2. US 2003/152820 A1 discloses a solid polymer ion exchange membrane for an electrochemical cell, incl. a battery. It consists of planar layers joined together to a unitary structure. The support is impregnated and adjacent layers are joined to form the unitary assembly. The membrane support consists of porous expanded polytetrafluoroethylene which is filled with an ion exchange resin. The specific resistance is about 70mohm/cm2 and current densities of 500mA/cm2 can be applied.

The ion-exchange membrane is configured to be permeable to certain non-redox couple reactants (also referred to as "charge transport ions" or "charge carrier ions") in the catholyte and anolyte solutions to facilitate the electrochemical reactions. Redox couple reactants (also referred to as "non-charge transport ions" or "non-charge carrier ions") in the catholyte and anolyte solutions, however, can also permeate through the ion-exchange membrane and mix together. The mixing of the redox couple reactants can induce in a self-discharge reaction that can disadvantageously decrease the overall energy efficiency of the flow battery system, especially when the flow battery cells are operated at current densities less than 100 milliamps per square centimeter (mA/cm$^2$), which is the typical current density operating range of conventional flow battery cells.

The permeability of the ion-exchange membrane to the redox couple reactants is typically inversely related to a thickness of the ion-exchange membrane. A typical flow battery cell, therefore, includes a relatively thick ion-exchange membrane (e.g., ≥ approximately 175 micrometers ($\mu$m); ~ 6889 micro inches ($\mu$in)) to reduce or eliminate redox couple reactant crossover and mixing in an effort to decrease the overall energy inefficiency of the flow battery system, especially when the flow battery cells are operated at current densities less than 100 mA/cm$^2$.

BRIEF DESCRIPTION OF THE DRAWINGS

FIG. 1 is a schematic diagram of one embodiment of a flow battery system, which includes a plurality of flow battery cells arranged in a stack.
FIG. 2 is a sectional diagrammatic illustration of one embodiment of one of the flow battery cells in FIG. 1, which includes an ion-exchange membrane.
FIG. 3 is a cross-sectional diagrammatic illustration of one embodiment of the ion-exchange membrane in FIG. 2.
FIGS. 4A to 4C are enlarged partial sectional diagrammatic illustrations of different embodiments of the ion-exchange membrane in FIG. 2.
FIG. 5 is a graphical comparison of overall energy inefficiencies versus current densities for two different flow battery cells.

DETAILED DESCRIPTION

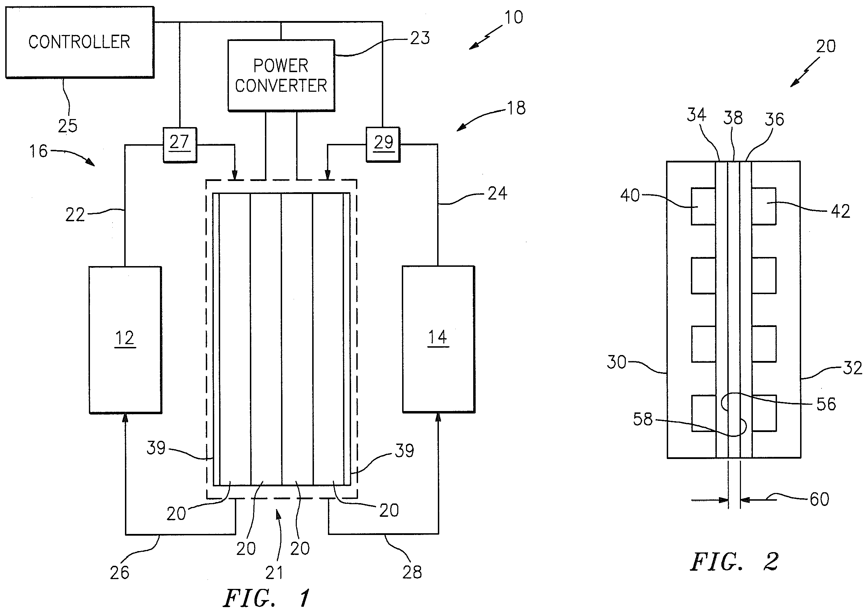

Referring to FIG. 1, a schematic diagram of a flow battery system 10 is shown. The flow battery system 10 is configured to selectively store and discharge electrical energy. By "store" it is meant that electrical energy is converted into a storable form that can later be converted back into electrical energy and discharged. During operation, for example, the flow battery system 10 can convert electrical energy generated by a renewable or non-renewable power system (not shown) into chemical energy, which is stored within a pair of first and second electrolyte solutions (e.g., anolyte and catholyte solutions). The flow battery system 10 can later convert the stored chemical energy back into electrical energy. Examples of suitable first and second electrolyte solutions include vanadium/vanadium electrolyte solutions, or any other pair of anolyte and catholyte solutions of substantially similar redox species. The pair of first and second electrolyte solutions, however, is not limited to the aforesaid examples.

The flow battery system 10 includes a first electrolyte storage tank 12, a second electrolyte storage tank 14, a first electrolyte circuit loop 16, a second electrolyte circuit loop 18, at least one flow battery cell 20, a power converter 23 and a controller 25. In some embodiments, the flow battery system 10 can include a plurality of the flow battery cells 20 arranged and compressed into at least one stack 21 between a pair of end plates 39, which cells 20 can be operated to collectively store and produce electrical energy.

Each of the first and second electrolyte storage tanks 12 and 14 is adapted to hold and store a respective one of the electrolyte solutions.

The first and second electrolyte circuit loops 16 and 18 each have a source conduit 22, 24, a return conduit 26, 28 and a flow regulator 27, 29, respectively. The first and second flow regulators 27 and 29 are each adapted to regulate flow of one of the electrolyte solutions through a respective one of the electrolyte circuit loops 16, 18 in response to a respective regulator control signal. Each flow regulator 27, 29 can include a single device, such as a variable speed pump or an electronically actuated valve, or a plurality of such devices, depending upon the particular design requirements of the flow battery system. Each flow regulator 27, 29 can be connected inline within its associated source conduit 22, 24.

Referring to FIG. 2, a diagrammatic illustration of one embodiment of the flow battery cell 20 is shown. The flow battery cell 20 includes a first current collector 30, a second current collector 32, a first liquid-porous electrode layer 34 (hereinafter "first electrode layer"), a second liquid-porous electrode layer 36 (hereinafter "second electrode layer"), and an ion-exchange membrane 38.

The first and second current collectors 30 and 32 are each adapted to transfer electrons to and/or away from a respective one of the first or second electrode layers 34, 36. In some embodiments, each current collector 30, 32 includes one or more flow channels 40 and 42. In other embodiments, one or more of the current collectors can be configured as a bipolar plate (not shown) with flow channels. Examples of such bipolar plates are disclosed in PCT Application No. PCT/US09/68681 and which is hereby incorporated by reference in its entirety.

The first and second electrode layers 34 and 36 are each configured to support operation of the flow battery cell 20 at relatively high current densities (i.e. greater than 100 mA/cm$^2$ ; ~ 645 mA/in$^2$). Examples of such elec-

trode layers are disclosed in U.S. Patent Application No. 13/022,285 filed on February 7, 2011, which is hereby incorporated by reference in its entirety.

The ion-exchange membrane 38 is configured as permeable to certain non-redox couple reactants such as, for example, H$^+$ ions in vanadium/vanadium electrolyte solutions in order to transfer electric charges between the electrolyte solutions. The ion exchange membrane 38 is also configured to substantially reduce or prevent permeation therethrough (also referred to as "crossover") of certain redox couple reactants such as, for example, V$^{4+/5+}$ ions in a vanadium catholyte solution or Y$^{2+/3+}$ ions in a vanadium anolyte solution.

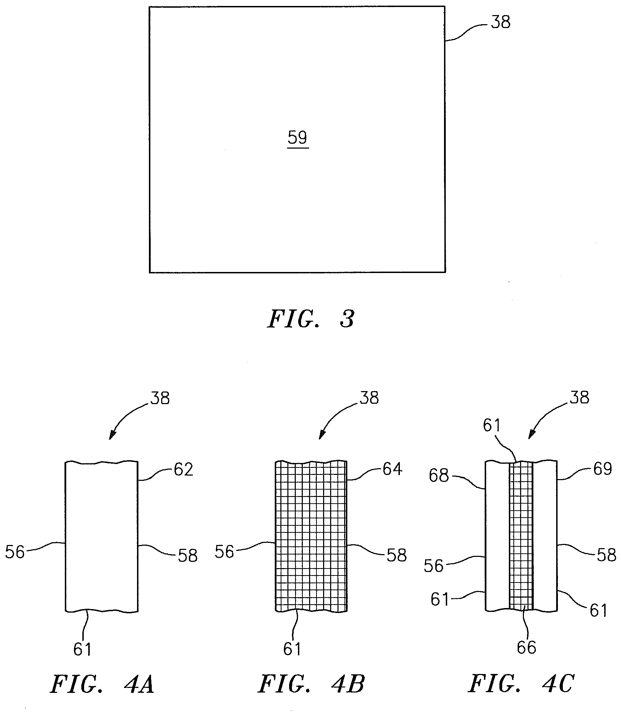

The ion-exchange membrane 38 has a first ion exchange surface 56, a second ion exchange surface 58, a thickness 60 and a cross-sectional area 59 (see FIG. 3). The ion-exchange membrane also has certain material properties that include an ionic resistance, an area specific resistance, a conductivity and a resistivity. The membrane thickness 60 extends between the first ion exchange surface 56 and the second ion exchange surface 58. The ionic resistance is measured, in ohms (Ω), along a path between the first ion exchange surface 56 and the second ion exchange surface 58. The ionic resistance is a function of the membrane thickness 60, the membrane cross-sectional area 59 (see FIG. 3) and the bulk membrane resistivity. The ionic resistance can be determined, for example, using the following equation:

$$R = (\rho * L) / A$$

where "$R$" represents the ionic resistance, "$\rho$" represents the membrane bulk resistivity, "$L$" represents the membrane thickness 60, "$A$" represents the membrane cross-sectional area 59 (see FIG. 3). The area specific resistance is a function of the ionic resistance and the membrane cross-sectional area 59 (see FIG. 3). The area specific resistance can be determined, for example, using the following equation:

$$R_{AS} = R * A$$

where "$R_{AS}$" represents the area specific resistance of the ion-exchange membrane 28.

The membrane thickness 60 can be sized and/or the area specific resistance can be selected to reduce overall energy inefficiency of the flow battery cell 20 as a function of an average current density at which the flow battery cell 20 is to be operated, which will be described below in further detail. The membrane thickness 60 is sized less than 125 μm (~ 4921 μin) (e.g., < 100 μm; ~ 3937 μin) where the flow battery cell 20 is to be operated at an average current density above 100 mA/cm$^2$ (~645 mA/in$^2$) (e.g., > approximately 200

mA/cm$^2$; ~ 1290 mA/in$^2$). The area specific resistance is selected to be less than 425 mΩ*cm$^2$ (~ 2742 mΩ*in$^2$) where the flow battery cell 20 is to be operated at an average current density above 100 mA/cm$^2$ (e.g., > approximately 200 mAlcm2).

Referring to FIGS. 4A to 4C, the ion-exchange membrane 38 includes one or more membrane layers 61. The flow battery comprises an ion exchange membrane constructed from a single layer of perfluoroalkyl sulfonimide ionomer. In the embodiment shown in FIG. 4A, for example, the ion-exchange membrane 38 is constructed from a single layer 62 of a polymeric ion-exchange material (also referred to as an "ionomer") such as perfluorosulfonic acid (also referred to as "PSFA") (e.g., Nafion® polymer manufactured by DuPont of Wilmington, Delaware, United States) or perfluoroalkyl sulfonimide ionomer (also referred to as "PFSI"). Other suitable ionomer materials include any polymer with ionic groups attached, which polymer can be fully or partially fluorinated for increased stability, as compared to hydrocarbon-based polymers. Examples of suitable polymers include polytetrafluoroethylenes (also referred to as "PTFE") such as Teflon® (manufactured by DuPont of Wilmington, Delaware, United States), polyvinylidene fluorides (also referred to as "PVDF") and polybenzimidazoles (also referred to as "PBI"). Examples of suitable ionic groups include sulfonates, sulfonimides, phosphates, phosphonic acid groups, sulfonic groups, as well as various anionic groups.

In the embodiment shown in FIG. 4B, the ion-exchange membrane 38 is constructed from a composite layer 64. The composite layer 64 can include a matrix of nonconductive fibrous material (e.g., fiberglass), or a porous sheet of PTFE (such as Gore-Tex® material manufactured by W. L. Gore and Associates of Newark, Delaware, United States), impregnated with an ion-exchange binder or ionomer (e.g., PFSA, PFSI, etc.). Alternatively, the composite layer 64 can be constructed from a mixture of nonconductive fibrous material or PTFE and an ion-exchange ionomer (e.g., PFSA).

In the embodiment shown in FIG. 4C, the ion-exchange membrane 38 is constructed from a composite layer 66 disposed between two polymeric layers 68 and 69. The composite layer 66 can be constructed from, as indicated above, a matrix of nonconductive fibrous material impregnated with an ion-exchange binder. The polymeric layers 68 and 69 can each be constructed from a polymeric ion-exchange material such as PFSA, PFSI or some other fluoropolymer-based ionomer, or a copolymer-based ionomer. Alternatively, each polymeric layer 68, 69 can each be constructed from a different type of ionomer. The polymeric layer that is proximate the anolyte solution, for example, can be constructed from an ionomer that is less stable to oxidation such as a hydrocarbon-based ionomer. The polymeric layer that is proximate the catholyte solution, on the other hand, can be constructed from an ionomer that is more stable to oxidation such as a fully fluorinated ionomer. In an alternative embodiment, a polymeric ion-exchange material layer (e.g., a layer of PFSA) can be disposed between two porous layers of polymers that are not ionomer materials (e.g., porous polyethylene or porous PTFE, such as Gore-Tex® material manufactured by W. L. Gore and Associates of Newark, Delaware, United States). In some embodiments, hydrophobic materials such as PTFE can be pretreated to make them hydrophilic. An example of such a treated porous PTFE layer is a GORE™ polytetrafluoroethylene (PTFE) separator (formerly known as EXCELLERATOR®) manufactured by W. L. Gore and Associates of Newark, Delaware, United States. The ion-exchange membrane 38, however, is not limited to the aforesaid configurations and materials.

Referring again to FIG. 2, the ion-exchange membrane 38 is disposed between the first and second electrode layers 34 and 36. In one embodiment, for example, the first and second electrode layers 34 and 36 are hot pressed or otherwise bonded onto opposite sides of the ion-exchange membrane 38 to attach and increase interfacial surface area between the aforesaid layers 34, 36 and 38. The first and second electrode layers 34 and 36 are disposed between, and are connected to the first and second current collectors 30 and 32.

Referring again to FIG. 1, the power converter 23 is adapted to regulate current density at which the flow battery cells operate, in response to a converter control signal, by regulating exchange of electrical current between the flow battery cells 20 and, for example, an electrical grid (not shown). The power converter 23 can include a single two-way power converter or a pair of one-way power converters, depending upon the particular design requirements of the flow battery system. Examples of suitable power converters include a power inverter, a DC/DC converter connected to a DC bus, etc. The present system 10, however, is not limited to any particular type of power conversion or regulation device.

The controller 25 can be implemented by one skilled in the art using hardware, software, or a combination thereof. The hardware can include, for example, one or more processors, analog and/or digital circuitry, etc. The controller 25 is adapted to control storage and discharge of electrical energy from flow battery system 10 by generating the converter and regulator control signals. The converter control signal is generated to control the current density at which the flow battery cells are operated. The regulator control signals are generated to control the flow rate at which the electrolyte solutions circulate through the flow battery system 10.

Referring to FIGS. 1 and 2, the source conduit 22 of the first electrolyte circuit loop 16 fluidly connects the first electrolyte storage tank 12 to one or both of the first current collector 30 and the first electrode layer 34 of each flow battery cell. The return conduit 26 of the first electrolyte circuit loop 16 reciprocally fluidly connects the first current collector 30 and/or the first electrode layer 34 of each flow battery cell to the first electrolyte storage tank 12. The source conduit 24 of the second electrolyte circuit loop 18 fluidly connects the second electrolyte storage tank 14 to one or both of the second current collector 32 and the second electrode layer 36 of each flow battery cell. The return conduit 28 of the second electrolyte circuit loop 18 reciprocally fluidly connects the second current collector 32 and/or the second electrode layer 36 of each flow battery cell to the second electrolyte storage tank 14. The power converter 23 is connected to the flow battery stack through a pair of first and second current collectors 30 and 32, each of which can be disposed in a different flow battery cell 20 on an opposite end of the stack 21 where the cells are serially interconnected. The controller 25 is in signal communication (e.g., hardwired or wirelessly connected) with the power converter 23, and the first and second flow regulators 27 and 29.

Referring still to FIGS. 1 and 2, during operation of the flow battery system 10, the first electrolyte solution is circulated (e.g., pumped via the flow regulator 27) between the first electrolyte storage tank 12 and the flow battery cells 20 through the first electrolyte circuit loop 16. More particularly, the first electrolyte solution is directed through the source conduit 22 of the first electrolyte circuit loop 16 to the first current collector 30 of each flow battery cell 20. The first electrolyte solution flows through the channels 40 in the first current collector 30, and permeates or flows into and out of the first electrode layer 34; i.e., wetting the first electrode layer 34. The permeation of the first electrolyte solution through the first electrode layer 34 can result from diffusion or forced convection, such as disclosed in PCT Application No. PCT/US09/68681, which can facilitate relatively high reaction rates for operation at relatively high current densities. The return conduit 26 of the first electrolyte circuit loop 16 directs the first electrolyte solution from the first current collector 30 of each flow battery cell 20 back to the first electrolyte storage tank 12.

The second electrolyte solution is circulated (e.g., pumped via the flow regulator 29) between the second electrolyte storage tank 14 and the flow battery cells 20 through the second electrolyte circuit loop 18. More particularly, the second electrolyte solution is directed through the source conduit 24 of the second electrolyte circuit loop 18 to the second current collector 32 of each flow battery cell 20. The second electrolyte solution flows through the channels 42 in the second current collector 32, and permeates or flows into and out of the second electrode layer 36; i.e., wetting the second electrode layer 36. As indicated above, the permeation of the second electrolyte solution through the second electrode layer 36 can result from diffusion or forced convection, such as disclosed in PCT Application No. PCT/US09/68681, which can facilitate relatively high reaction rates for operation at relatively high current densities. The return conduit 28 of the second electrolyte circuit loop 18 directs the second electrolyte solution from the second current collector 32 of each flow battery cell 20 back to the second electrolyte storage tank 14.

During an energy storage mode of operation, electrical energy is input into the flow battery cell 20 through the current collectors 30 and 32. The electrical energy is converted to chemical energy through electrochemical reactions in the first and second electrolyte solutions, and the transfer of non-redox couple reactants from, for example, the first electrolyte solution to the second electrolyte solution across the ion-exchange membrane 38. The chemical energy is then stored in the electrolyte solutions, which are respectively stored in the first and second electrolyte storage tanks 12 and 14. During an energy discharge mode of operation, on the other hand, the chemical energy stored in the electrolyte solutions is converted back to electrical energy through reverse electrochemical reactions in the first and second electrolyte solutions, and the transfer of the non-redox couple reactants from, for example, the second electrolyte solution to the first electrolyte solution across the ion-exchange membrane 38. The electrical energy regenerated by the flow battery cell 20 passes out of the cell through the current collectors 30 and 32.

Energy efficiency of the flow battery system 10 during the energy storage and energy discharge modes of operation is a function of the overall energy inefficiency of each flow battery cell 20 included in the flow battery system 10. The overall energy inefficiency of each flow battery cell 20, in turn, is a function of (i) over-potential inefficiency and (ii) coulombic cross-over inefficiency of the ion-exchange membrane 38 in the respective cell 20.

The over-potential inefficiency of the ion-exchange membrane 38 is a function of the area specific resistance and the thickness 60 of the ion-exchange membrane 38. The over-potential inefficiency can be determined using, for example, the following equations:

$$n_v = (V - V_{OCV})/V_{OCV} \, ,$$

$$V = f(iR_{AS})$$

where "$n_v$" represents the over potential inefficiency, "$V$" represents the voltage potential of the flow battery cell 20, "$V_{OCV}$" represents open circuit voltage, "$f()$" represents a functional relationship, and "$i$" represents ionic current across the ion-exchange membrane 38.

The coulombic cross-over inefficiency of the ion-exchange membrane 38 is a function of redox couple reactant cross-over and, therefore, the membrane thickness 60. The coulombic cross-over inefficiency can be determined using, for example, the following equations:

$$n_c = Flux_{cross\text{-}over} / Consumption$$

$$Flux_{cross\text{-}over} = f(L)$$

where "$n_c$" represents the coulombic cross-over inefficiency, "$Flux_{cross-over}$" represents the flux rate of redox couple species that diffuses through the ion-exchange membrane 38 and "Consumption" represents the rate of redox couple species converted by the ionic current across the ion-exchange membrane 38 .

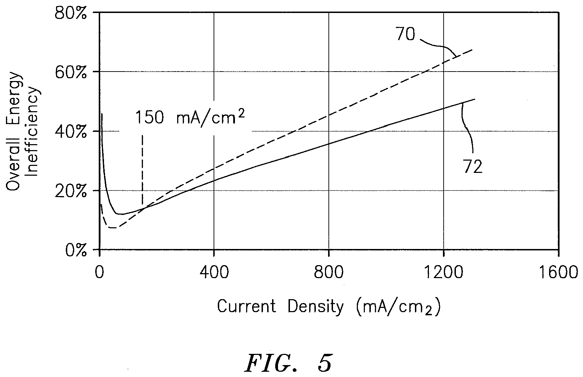

Referring to FIG. 5, a graphical comparison is shown of overall energy inefficiencies versus current densities for first and second embodiments of the flow battery cell 20. The first (comparative) embodiment of the flow battery cell 20 (shown via the dashed line 70) has an ion-exchange membrane with a thickness of approximately 160 μm (∼ 6299 μin). The second embodiment of the flow battery cell 20 (shown via the solid line 72) has an ion-exchange membrane with a thickness of approximately 50 μm (∼ 1968 μin). The second embodiment of the flow battery cell 20 with the thinner membrane thickness has a lower overall energy inefficiency, relative to the energy inefficiency of the first embodiment of the flow battery cell, when the cell 20 is operated at a current density above approximately 150 mA/cm² (∼ 967 mA/in²). The lower overall energy inefficiency is achieved, at least in part, by operating the flow battery cell 20 above the aforesaid relatively high current density to mitigate additional redox couple reactant crossover due to the thinner membrane thickness and lower area specific resistance. A lower overall energy inefficiency of a flow battery cell, in other words, is achieved when the magnitude of an increase in coulombic cross-over inefficiency due to a thin membrane thickness is less than the magnitude of a decrease in over-potential inefficiency due to a corresponding low area specific resistance of the ion-exchange membrane.

While various embodiments of the present flow battery have been disclosed, it will be apparent to those of ordinary skill in the art that many more embodiments and implementations are possible within the scope thereof. Accordingly, the present flow battery is not to be restricted except in light of the attached claims and their equivalents.

**Claims**

1. A flow battery, comprising:

a first electrode and a second electrode, a membrane and a solution having a reversible redox couple reactant, wherein the solution wets the membrane, said membrane:

having an area specific resistance of less than four hundred twenty five milliohms - square centimeter across the membrane; being operable to transfer ionic current between the first electrode and the second electrode at a current density greater than one hundred milliamps per square centimetre;

having a thickness of less than one hundred twenty five micrometers; and

wherein the membrane is an ion exchange membrane constructed from a single layer of perfluoroalkyl sulfonimide ionomer.

2. The flow battery of claim 1, wherein the membrane is configured as permeable to a non-redox couple reactant within the solution.

3. The flow battery of claim 1, wherein the membrane comprises a composite of a first ion exchange material and a material different than the first ion exchange material.

4. The flow battery of claim 1, wherein the membrane comprises a first layer and a second layer, wherein the first layer has an ion exchange material, and wherein the second layer has a material different than the ion exchange material.

**Patentansprüche**

1. Flussbatterie, umfassend:

eine erste Elektrode und eine zweite Elektrode, eine Membran und eine Lösung, die einen Reaktanten für eine reversible Redoxkupplung aufweist, wobei die Lösung die Membran benetzt, wobei die Membran:
einen flächenspezifischen Widerstand von weniger als vierhundertfünfundzwanzig Milliohm-Quadratzentimeter über die Membran aufweist; dazu betriebsfähig ist, Ionenstrom zwischen der ersten Elektrode und der zweiten Elektrode mit einer Stromdichte von mehr als einhundert Milliampere pro Quadratzentimeter zu übertragen; eine Dicke von weniger als einhundertfünfundzwanzig Mikrometern aufweist; und wobei die Membran eine Ionenaustauschermembran ist, die aus einer einzigen Schicht aus Perfluoralkylsulfonimidionomer aufgebaut ist.

2. Flussbatterie nach Anspruch 1, wobei die Membran als für einen Reaktanten für eine Nicht-Redoxkupplung innerhalb der Lösung durchlässig konfiguriert ist.

3. Flussbatterie nach Anspruch 1, wobei die Membran einen Verbundstoff aus einem ersten Ionenaustauschermaterial und einem anderen Material als dem ersten Ionenaustauschermaterial umfasst.

4. Flussbatterie nach Anspruch 1, wobei die Membran eine erste Schicht und eine zweite Schicht umfasst, wobei die erste Schicht ein Ionenaustauschermaterial aufweist und wobei die zweite Schicht ein anderes Material als das Ionenaustauschermaterial aufweist.

## Revendications

1. Batterie en flux continu, comprenant :
   une première électrode et une seconde électrode, une membrane et une solution comportant un réactif à couple redox réversible, dans laquelle la solution humidifie la membrane, ladite membrane :

   comportant une résistance spécifique de surface inférieure à quatre cent vingt-cinq milliohms-centimètre carré à travers la membrane ; pouvant fonctionner pour transférer un courant ionique entre la première électrode et la seconde électrode à une densité de courant supérieure à cent milliampères par centimètre carré ; présentant une épaisseur inférieure à cent vingt-cinq micromètres ; et dans laquelle la membrane est une membrane échangeuse d'ions construite à partir d'une couche unique d'un ionomère de sulfonimide perfluoroalkyle.

2. Batterie en flux continu selon la revendication 1, dans laquelle la membrane est configurée comme étant perméable à un réactif à couple non redox à l'intérieur de la solution.

3. Batterie en flux continu selon la revendication 1, dans laquelle la membrane comprend un composite d'un premier matériau échangeur d'ions et un matériau différent du premier matériau échangeur d'ions.

4. Batterie en flux continu selon la revendication 1, dans laquelle la membrane comprend une première couche et une seconde couche, dans laquelle la première couche a un matériau échangeur d'ions, et dans laquelle la seconde couche a un matériau différent du matériau échangeur d'ions.

FIG. 2

FIG. 1

FIG. 3

FIG. 4A

FIG. 4B

FIG. 4C

FIG. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 02310111
- US 0968681 W
- US 02228511
- US 2010003545 A1
- US 2005031925 A1
- US 2003152820 A1